# FASCICULE DE BREVET EUROPEEN

(11) **EP 0 749 542 B1**
(45) Date de publication et mention de la délivrance du brevet: **05.04.2000**
(21) Numéro de dépôt: 96901376.2
(22) Date de dépôt: 11.01.1996
(51) Int. Cl.: F16F 15/16, F16F 15/131

(54) **PROCEDE DE FABRICATION D'UN VOLANT AMORTISSEUR NOTAMMENT POUR VEHICULES AUTOMOBILES**
VERFAHREN ZUR HERSTELLUNG EINES DÄMPFUNGSSCHWUNGRADES INSBESONDERE FÜR KRAFTFAHRZEUGE
METHOD FOR MAKING A FLYWHEEL, PARTICULARLY FOR MOTOR VEHICLES

(30) Priorité: 11.01.1995 FR 9500391
(43) Date de publication de la demande: 27.12.1996
(73) Titulaire: VALEO, 75017 Paris (FR)
(72) Inventeur: HABERBUSCH, André, F-80260 Poulainville (FR); TESSITORE, Alessandro, I-17010 Cengio (IT)
(74) Mandataire: Gamonal, Didier
(86) Numéro de dépôt international: FR9600044
(87) Numéro de publication internationale: WO9621812

(56) Documents cités:
- EP-A- 0 364 219
- EP-A- 0 620 380
- FR-A- 2 603 678
- FR-A- 2 626 335
- PATENT ABSTRACTS OF JAPAN vol. 16, no. 206 (M-1248), 15 Mai 1992 & JP,A,04 031674 (HITACHI LTD), 3 Février 1992,

## Description

La présente invention concerne les volants amortisseurs, notamment pour véhicules automobiles, du genre comportant deux masses coaxiales, dont l'une est destinée à être liée en rotation à un arbre menant, tel que le vilebrequin d'un moteur à combustion interne d'un véhicule automobile, et dont l'autre est destinée à être liée en rotation à un arbre mené, tel que l'arbre d'entrée d'une boîte de vitesses, du type dans lequel la première masse comporte une chambre pouvant être remplie, au moins partiellement, d'un agent pâteux ou visqueux et dans laquelle sont logés des moyens élastiques à action circonférentielle interposés entre lesdites masses.

La présente invention se rapporte plus particulièrement à un procédé de fabrication d'un tel volant décrit par exemple dans le document FR-A-2 603 678. Dans ce document, avant équilibrage du volant amortisseur, la première masse comportant la chambre est amenée à une vitesse de rotation permettant une répartition de l'agent pâteux ou visqueux selon la périphérie de la chambre à un niveau radialement intérieur aussi constant que possible.

Le remplissage au moins partiel de la chambre peut être effectué lorsque la masse d'inertie est en rotation.

En pratique le volant amortisseur est prémonté avant remplissage de la chambre.

Ce procédé ne donne pas entièrement satisfaction car il nécessite notamment de prévoir un orifice pour le remplissage de la chambre.

La présente invention a pour objet de pallier ces inconvénients.

Suivant l'invention un procédé de fabrication d'un volant amortisseur du type sus-indiqué, dans lequel la première masse comporte à sa périphérie externe une empreinte annulaire pour retenir radialement directement ou indirectement les moyens élastiques à action circonférentielle est caractérisé en ce que l'on dépose de manière régulière l'agent pâteux ou visqueux à la périphérie externe de ladite première masse avant fermeture de la chambre.

Ainsi il n'y a pas besoin de centrifuger l'agent pâteux ou visqueux.

Dans une forme de réalisation on dépose la graisse à l'aide d'une machine de graissage dans l'empreinte ou dans une goulotte, avantageusement fractionnée en secteurs annulaires, montée dans ladite empreinte puis on monte les moyens élastiques à action circonférentielle.

Dans une autre forme de réalisation, on monte les ressorts dans ladite empreinte ou dans ladite goulotte puis on dépose la graisse sur les ressorts.

Dans tous les cas on referme la chambre puis on procède à un équilibrage de la première masse.

On appréciera la simplicité du procédé qui peut être réalisé avec une machine de graissage rotative déposant le poids par exemple de graisse requis. Ce dépôt est réalisé de manière régulière.

La description qui va suivre illustre l'invention en regard des dessins annexés dans lesquels :
- la figure 1 est une vue en coupe axiale selon la ligne 1-1 de la figure 2 d'un volant amortisseur selon l'invention ;
- la figure 2 est une vue en coupe partielle selon la flèche 2 de la figure 1 ;
- la figure 3 est une vue partielle en coupe selon la ligne 3-3 de la figure 2 ;
- la figure 4 est une vue schématique de la machine de graissage.

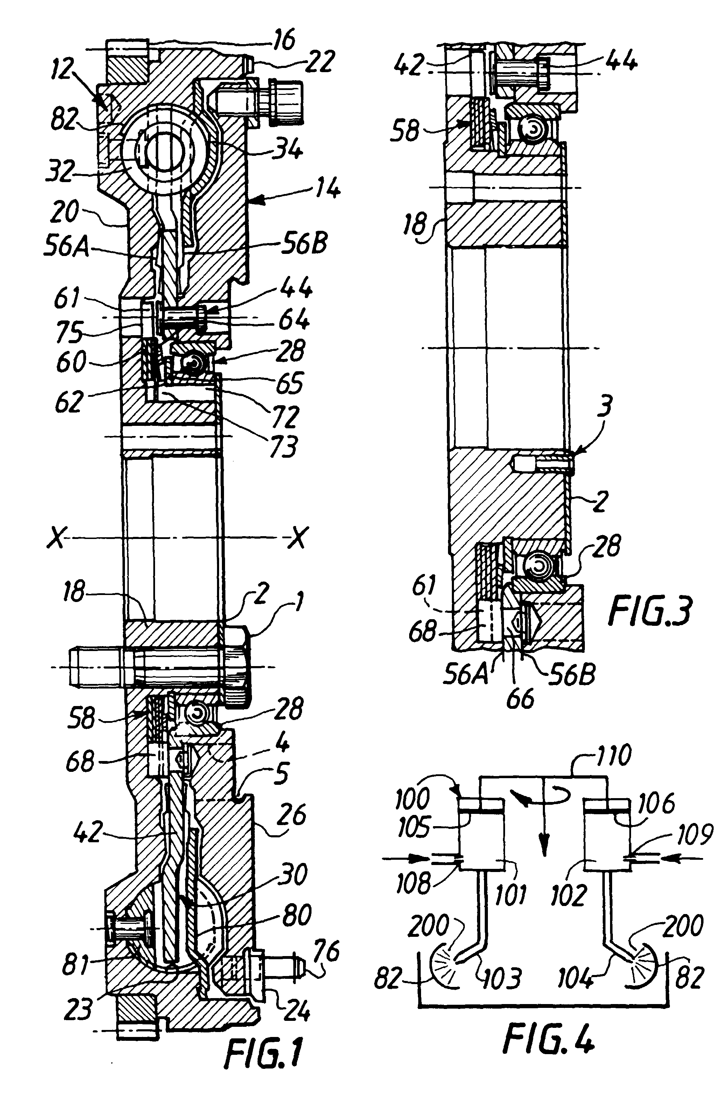

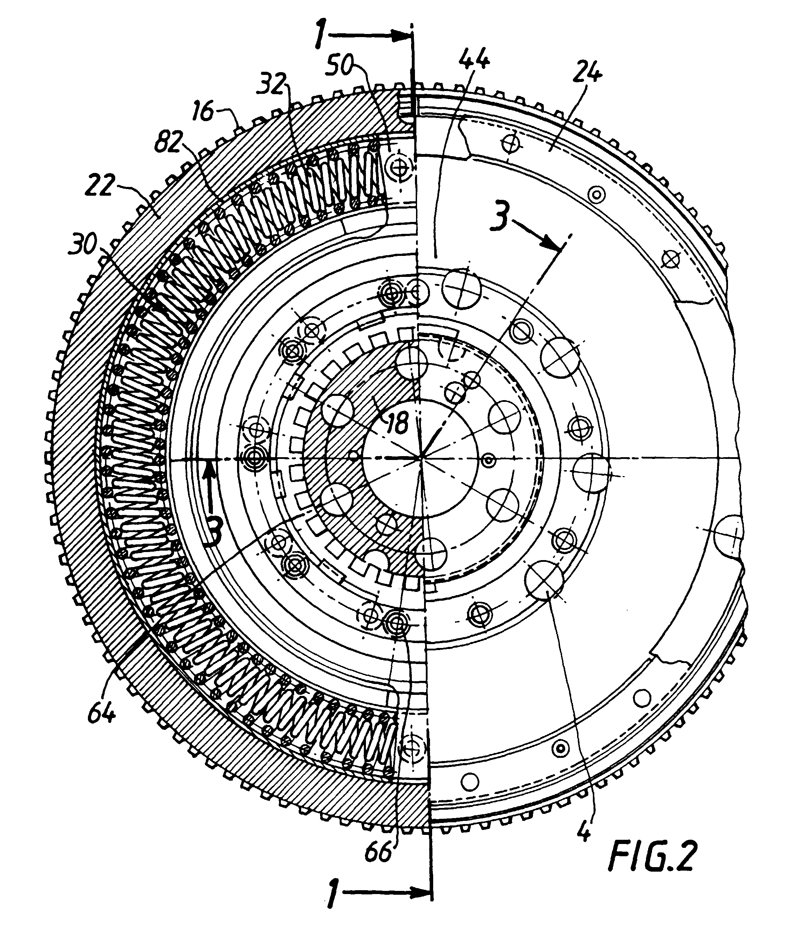

Dans les figures 1 à 3, on a représenté un volant amortisseur pour véhicules automobiles qui est pour l'essentiel constitué par une première masse 12 (ou premier élément tournant) et une seconde masse 14 (ou second élément tournant), qui sont mobiles l'une par rapport à l'autre autour d'un axe X-X de symétrie axiale de l'ensemble.

Ici les masses 12 et 14 sont coaxiales en étant montées mobiles l'une par rapport l'autre à l'encontre de moyens élastiques à action circonférentielle 32 et d'un dispositif de friction à action axiale 58.

La première masse 12, ici en forme de plateau, porte une couronne 16 de démarrage propre à coopérer avec le démarreur (non représenté) du véhicule. Ce plateau présente à sa périphérie interne, d'un seul tenant, un moyeu central 18 et à sa périphérie externe une jupe annulaire périphérique 22 d'orientation axiale.

Le plateau 20, d'un seul tenant avec sa jupe 22 et son moyeu 18, est en matière moulable, ici en fonte.

La première masse 12 est donc destinée à être fixée sur l'extrémité du vilebrequin du moteur à combustion interne de manière décrite ci-après.

Cette première masse 12 est donc destinée à être calée en rotation sur un arbre menant en étant fixée ici à celle-ci par des vis 1.

La seconde masse 14 est également en matière moulable, ici en fonte, et présente un plateau de réaction 26 avec à sa périphérie externe une jupe cylindrique 24 d'orientation axiale, ici fragmentée, entourée par la jupe 22 de la première masse 12.

La seconde masse 14 est montée à rotation sur le moyeu 18 de la première masse 12 par l'intermédiaire ici d'un roulement à billes 28 ou en variante par un autre palier par exemple du type à palier lisse.

La première masse 12 délimite en majeure partie à sa périphérie externe un logement (ou chambre) annulaire 30, qui est prévu pour recevoir les moyens élastiques à action circonférentielle 32 constitués ici par un ensemble de ressorts hélicoïdaux, ici concentriques, agencés en couronne.

Ici deux ensembles de ressorts concentriques 32 sont prévus. Bien entendu ce nombre dépend des applications.

Le logement 30 est délimité ici en majeure partie par le plateau 20, la jupe 22 et un disque 34 appartenant à la première masse.

A sa périphérie interne cette chambre 30 laisse apparaître une légère fente dans laquelle pénètre un disque 42 appartenant à la deuxième masse et ce à étanchéité de manière décrite ci-après.

Le disque 34, ici métallique, s'étend vers l'intérieur depuis la jupe 22 entre les deux plateaux 20,26 et ce radialement vers l'intérieur.

Le disque 34 est lié en rotation à la jupe extérieure 22 par sertissage étanche comme décrit dans le document FR-A-2 695 579. Pour ce faire la jupe 22 est épaulée et son épaulement présente une gorge destinée à recevoir le métal du disque métallique lors du sertissage de celui-ci.

En variante cette fixation étanche peut être réalisée par vissage comme décrit dans le document FR-A-2 687 442.

En variante on peut procéder à un rivetage ou un soudage. Ce disque 34 forme un couvercle pour le plateau 20 de forme creuse en étant délimité par sa jupe 22 et son moyeu 18.

Le plateau 26 est creusé pour logement du disque 34, qui est embouti localement en 80 (figure 1) pour appui des extrémités circonférentielles des ressorts hélicoïdaux 32.

En regard de ces emboutis 80 le plateau 20 présente des plaquettes 81 fixées par rivetage sur ledit plateau pour appui des extrémités circonférentielles desdites ressorts.

Le disque 34 et le plateau 20 définissent un canal annulaire pour les ressorts 32. A cet effet le plateau 20 est creusé annulairement à sa périphérie externe et le disque 34 est galbé, ceci pour retenir axialement et radialement les ressorts.

La jupe 22 est creusée intérieurement pour retenir radialement les ressorts 32.

A cet effet son alésage interne présente une empreinte 23 de forme annulaire. Le plateau 20, la jupe 22 et le disque 34 épousent ainsi la forme des ressorts 32, ici la forme des ressorts externes.

La seconde masse 12 comporte également un disque 42, dit disque intérieur, qui lui est lié en rotation par des rivets 44 et qui s'étend radialement depuis la périphérie interne du plateau 26 jusqu'au logement ou chambre annulaire 30. Cette chambre 30 est remplie ici partiellement d'un agent pâteux ou visqueux pour lubrifier les ressorts 32.

De manière connue en soi le plateau 26 constitue le plateau de réaction d'un embrayage.

Ainsi la seconde masse 14 est destinée à être calée en rotation sur un arbre mené, ici sur l'arbre d'entrée de la boîte de vitesses, par l'intermédiaire du disque de friction de l'embrayage (non représenté), dont les garnitures de frottement sont destinées à être pincées entre le plateau de réaction 26 et un plateau de pression (non représenté) appartenant au mécanisme, que comporte l'embrayage, ledit mécanisme étant destiné par son couvercle à être rapporté par des vis, dont l'une est visible dans la partie haute de la figure 1, sur le plateau de réaction 26.

Le bord extérieur du disque intérieur 42 comporte des pattes radiales 50, ici deux pattes globalement diamétralement opposées, prévues pour servir de butée aux extrémités circonférentielles des ressorts 32.

Ainsi le disque 42 pénètre dans le logement 30 et les ressorts 32, prenant appui sur les plaquettes 81 et les emboutis 80 du disque 34, sont destinés à être comprimés par les pattes 50.

Ici des pièces 82 anti-usure, ici en forme de goulotte, sont interposées radialement entre les ressorts 32 et la périphérie interne de la jupe 22.

Plus précisément ces goulottes 82 à section en forme d'arc de cercle sont reçues dans les empreintes 23 de forme annulaire. Les goulottes 82 s'étendent ici globalement sur 90° en épousant la forme des empreintes 23, ici une empreinte 23 fractionnée par les pièces 81.

Les ressorts 32 sont donc destinés à venir en contact avec les goulottes 82, ici en acier, sous l'action de la force centrifuge. La première masse 12 présente donc une empreinte annulaire pour retenir radialement les ressorts 32, ici de manière indirecte via les goulottes 82.

Un faible intervalle existe entre le plateau 20 et la périphérie interne du disque 34 pour pénétration du disque 42.

L'étanchéité interne du logement annulaire est assurée par deux rondelles d'étanchéité 56A,56B. Ces rondelles 56A,56B sont deux pièces annulaires en tôle découpées et embouties. Elles sont élastiques.

Les rondelles 56A,56B ferment le logement 30 à sa périphérie interne, ledit logement étant rempli partiellement d'un agent pâteux ou visqueux pour lubrifier les ressorts 32 de manière décrite ci-après.

Plus précisément le rebord extérieur de la rondelle 56A est en appui élastique contre une surface de portée formée en vis-à-vis dans le plateau 20 de la première masse 12, tandis que le bord radial extérieur de la seconde rondelle d'étanchéité 56B est en appui élastique contre une surface de portée formée en vis-à-vis à la périphérie interne du disque 34 de la première masse 12.

Les rondelles 56A et 56B sont disposées de part et d'autre du disque 32 en étant accolées à celui-ci.

Le volant amortisseur comporte également un dispositif de friction agissant axialement entre les deux masses.

Ce dispositif 58 entoure le moyeu 18 et comporte une rondelle de frottement 60, ici en matière plastique renforcée par des fibres, qui est destinée à frotter sur une portion de surface plane du plateau 20 et par une rondelle 62, ici métallique, entraînée en rotation par le moyeu 18.

Une rondelle élastique 64 à action axiale sollicite élastiquement la rondelle 62 en appui contre la rondelle 60.

La rondelle 64, ici du type rondelle Belleville, en variante une rondelle du type ondulée, prend appui sur un anneau 65 calé axialement sur la bague interne du roulement à billes 28 emmanché sur le moyeu 18.

Ce moyeu 18 est doté de trous de passage pour des vis de fixation 1 du volant amortisseur sur le vilebrequin du moteur.

Une telle vis 1 est visible dans la partie centrale de la figure 1.

Les vis 1 prennent appui par leur tête sur une rondelle 2 servant à caler axialement la bague interne du roulement 28 dans un sens.

Dans l'autre sens cette bague interne est calée axialement par l'anneau précité 65, qui peut consister en un circlips engagé dans une gorge du moyeu 18.

Ainsi le volant amortisseur est agencé entre deux ensembles tournants, dont l'un (le vilebrequin) est relié au moteur à combustion interne du véhicule et dont l'autre est relié (de manière débrayable) à l'arbre d'entrée de la boîte de vitesses.

La rondelle 60 comporte à sa périphérie externe une couronne dotée d'encoches 61. Ces encoches ou échancrures 61 sont destinées à coopérer avec des têtes 68 d'une série de rivets 66, qui sont fixés sur le disque annulaire intérieur 42 de la seconde masse 14.

Comme on peut le voir sur la figure 2 le bord radial interne de la rondelle d'étanchéité 56A est pincé entre la tête 68 de chaque rivet 66 et la portion de la surface plane du disque 42, ici métallique.

Ainsi la première rondelle d'étanchéité 56A est fixée sur le disque 42 et son rebord radial interne comporte à cet effet une série de trous traversés par les corps des rivets 66.

Cet agencement permet, outre l'entraînement en rotation de la rondelle 62 par coopération des têtes 68 avec le bord des échancrures 61 associé de la rondelle 60, d'assurer la fixation de la rondelle d'étanchéité 56A sur le disque 42.

Cette conception permet d'assurer le montage et la fixation de la rondelle d'étanchéité 56A sur le disque 42 avant la fixation dudit disque 42 sur le plateau 26 de la deuxième masse 14 au moyen d'une série de rivets de liaison 44.

Ces rivets 44, implantés à la périphérie interne du plateau 26, tout comme les rivets 66, assurent uniquement la fixation du disque 42 sans assurer la fixation des rondelles d'étanchéité 56A,56B qui sont ainsi ménagées.

Avantageusement la deuxième rondelle d'étanchéité 56B est fixée de la même manière que la rondelle d'étanchéité 56A à l'aide des organes de fixation 66.

Ainsi le bord radial interne de la rondelle d'étanchéité 56B est pincé entre le pied de chaque rivet 66 et la portion en vis-à-vis du disque 42.

Ce bord radial interne présente des trous traversés par les corps des rivets 66.

Ainsi les bords radiaux des rondelles 56A,56B s'étendent au contact du disque 42 et de part et d'autre de celui-ci, l'ensemble formant un ensemble manipulable, transportable et imperdable.

Comme on peut le voir sur la figure 2, les rivets de fixation 66 et les rivets de liaison 44 sont avantageusement agencés sensiblement sur un même cercle et alternés régulièrement le long de ce cercle.

La deuxième masse 14 présente des creusures en regard des pieds des rivets 66 pour permettre le passage desdits pieds. Le disque 42 permet le calage axial de la bague externe du roulement 28 entre un épaulement de la deuxième masse 14 et la périphérie interne du disque 42 troué centralement comme le disque 34.

Pour mémoire on rappellera que, lors du fonctionnement du volant amortisseur, les ressorts sont admis à être comprimés entre les bras 50 du disque 42 et l'ensemble des appuis plaquettes 81 du plateau 20 - emboutis 80 du disque 34 de la première masse 12.

Au cours de ce mouvement la tête 68 des rivets 66 entraîne en rotation la rondelle 60 avec apparition d'un frottement entre la rondelle 60 et le plateau 20.

Un autre frottement se produit entre la rondelle 60 et la rondelle 62 qui est calée en rotation sur la première masse par une liaison du type tenon-mortaise.

Pour ce faire la rondelle 62 présente à sa périphérie interne des pattes 73 engagées de manière complémentaire dans des rainures 72 pratiquées dans le moyeu 18.

Il intervient ainsi un frottement taré par la rondelle élastique 64. Bien entendu le disque 34 est troué centralement et s'étend radialement au-dessus des rivets 44,66.

On notera que le plateau 26 présente à sa périphérie interne une pluralité de trous 4 prévus pour ventiler le volant amortisseur.

Ainsi de l'air peut s'écouler entre les deux plateaux 20 et 26. Cette ventilation favorise le refroidissement du roulement 28, les trous étant implantés à proximité du roulement 28. Ces trous 4 alternent avec les rivets 66 et 44.

Suivant une caractéristique ces trous débouchent dans une gorge 5, que présente le plateau de réaction 26 à sa périphérie interne. Cette gorge est destinée à collecter l'huile s'échappant à partir du centre du disque de friction, pour ne pas polluer les garnitures de frottement dudit disque de friction.

Ainsi les trous 4 ont une double fonction à savoir une fonction de ventilation et de collecte de l'huile qui provient par exemple de fuites d'huile ayant lieu au niveau de la boîte de vitesses, ladite huile transitant notamment par le moyeu calé en rotation sur l'arbre d'entrée de la boîte de vitesses, ledit moyeu appartenant au disque de friction.

Ainsi l'huile est centrifugée dans la gorge 5 et est évacuée par les trous 4. La face de friction, qu'offre le plateau 26 à la garniture de frottement concernée du disque de friction ne risque pas d'être polluée.

On notera que la rondelle 2 servant à l'appui des têtes des vis de fixation 1 est fixée de manière indépendante au moyeu 18 à l'aide de rivets "pop" ou de pions emmanchés dans le moyeu 18.

Suivant l'invention un procédé de fabrication d'un volant amortisseur du type sus-indiqué est caractérisé en ce que l'on dépose l'agent pâteux ou visqueux à la périphérie externe de la première masse avant fermeture de la chambre ou logement 30. Ce dépôt est réalisé ici de manière régulière au voisinage de la jupe 22 et plus précisément de l'empreinte semi torique 23 de celle-ci. Ici l'agent précité consiste en de la graisse pâteuse.

Lorsque le volant ne possède pas de goulotte 82 on dépose de manière régulière la graisse à l'aide d'une machine de graissage 100 dans l'empreinte 23.

En variante lorsque le volant présente des goulottes 82 on monte d'abord les goulottes dans les empreintes 23 puis l'on dépose de manière régulière la graisse dans les goulottes 82.

Dans une autre forme de réalisation on monte les ressorts 32 dans les empreintes 23 ou dans les goulottes 82, selon les applications, puis l'on dépose la graisse de manière régulière sur les ressorts.

Avantageusement ce dépôt est réalisé à l'aide d'une machine de graissage 100.

Par exemple lorsque le volant est équipé de deux goulottes 82 on dépose de manière régulière la graisse dans chaque goulotte 82 en effectuant un demi-tour.

Pour ce faire la machine comporte deux récipients 101,102 communiquant chacun avec une buse 103,104 permettant d'injecter (ou déposer) la graisse dans les goulottes 82.

A l'intérieur de chaque récipient 101 est monté un piston 105,106.

Ces pistons 105,106 sont attelés ensemble par un mécanisme 110 ainsi adapté par ce mécanisme à effectuer un mouvement de rotation et de translation tel que représenté par les flèches de la figure 4.

Initialement les pistons 105,106 sont en position haute et les récipients 101,102 sont remplis de graisse à la faveur d'ouvertures 108,109 pratiquées dans leur partie basse.

A ces ouvertures 108,109 sont associés des clapets unidirectionnels.

Ainsi initialement on injecte de la graisse par les ouvertures 108,109 dans les récipients 101,102 ce qui fait remonter les pistons 105,106.

Ensuite à l'aide du mécanisme 110 on fait descendre les pistons 105,106 en animant les récipients 101,102 d'un mouvement de rotation ce qui permet de déposer de manière régulière de la graisse à l'aide des buses 103,104 ou tampons dans les goulottes 82. Ainsi on dépose un cordon annulaire régulier dans les goulottes 82.

En variante on peut monter d'abord les ressorts 32 dans les goulottes 82 de manière précitée et injecter la graisse à l'aide de la machine à graisse 100 à la périphérie interne des ressorts 32, plus généralement sur la partie accessible de ceux-ci.

Dans tous les cas on injecte la quantité nécessaire de graisse à l'aide des récipients 101,102 et ce de manière continue, en sorte que l'on obtient dès le départ un équilibrage.

Pour cela on vérifie le poids de la graisse contenue dans les récipients 101 et 102.

On vérifie ainsi lors de la descente des pistons 105,106 que le poids de la graisse soit compris dans les limites de tolérance du poids de la graisse.

Si le poids n'est pas bon, on déclenche une alarme.

Ici le procédé de fabrication du volant des figures 1 et 3 est réalisé de la manière suivante :
- dans une première opération on fixe les rondelles d'étanchéité 56A,56B sur le disque 42 à l'aide des rivets 66. Cette opération est réalisée à la presse ;
- dans une deuxième opération on rivète les plaquettes 81 au plateau 20 à l'aide d'une presse et ce de manière étanche ;
- dans une troisième opération on monte le dispositif de frottement 58 avec ces rondelles 60,62,64,65 sur le moyeu 18 puis on rode ce dispositif de frottement, en actionnant la rondelle 60 à la faveur de ses échancrures 61, dans une quatrième opération ;
- dans une quatrième opération on met en place les goulottes 82 dans l'empreinte 23, puis on place les ressorts 32 dans les goulottes 82 et on dépose la graisse sur les ressorts 32 à l'aide de la machine 100 de la figure 4 en formant un cordon continu.

Ensuite on place le disque 42 équipé, puis on ferme la chambre 30 par le disque 34 en procédant à une opération de sertissage à l'aide d'une presse ou de vissage à l'aide d'une machine spéciale suivant le mode de fixation du disque 34 à la jupe 22.

Ensuite on emmanche les pions 76 sur le volant 26, lesdits pions 76 étant destinés à centrer le couvercle du mécanisme d'embrayage. Ceci est réalisé à la presse.

Dans une étape suivante on emmanche la bague externe du roulement sur le volant 26 plus précisément on emmanche ladite bague externe dans l'alésage interne du volant 26 à la presse.

Ensuite on emmanche l'ensemble roulement 28 - plateau 26 sur le moyeu 18 de la première masse 12.

Tous ces emmanchements sont réalisés à la presse.

Enfin on procède à la fixation du disque 42 par rivetage et ceci à la presse.

Après cette opération on masque par des bouchons 75 les ouvertures qui sont situées en coïncidence avec les rivets 44 pour procéder audit rivetage.

Bien entendu on peut effectuer un contrôle final.

Bien entendu la présente invention n'est pas limitée à l'exemple de réalisation décrit en particulier le nombre des ressorts dépend des applications.

La machine 100 peut effectuer un tour complet et ne comporter qu'un seul récipient.

On appréciera que l'on tire parti de la configuration du plateau creux 20 et notamment de sa jupe 22, éventuellement rapportée sur celui-ci par exemple par rivetage, sertissage ou soudage.

Grâce à l'invention on peut contrôler le poids des ressorts 32 et goulottes 82 avant mise en place de la graisse et déclencher une alarme si nécessaire.

Bien entendu, la présence des goulottes 82 n'est pas impérative, l'empreinte 23 pouvant retenir radialement directement les ressorts 32.

## Revendications

1. Procédé de fabrication d'un volant amortisseur, notamment pour véhicules automobiles du type comportant deux masses coaxiales (12,14), dont l'une (12) est destinée à être liée en rotation à un arbre menant, tel que le vilebrequin d'un moteur à combustion interne, et dont l'autre (14) est destinée à être reliée à un arbre mené, tel que l'arbre d'entrée d'une boîte de vitesses du type dans lequel la première masse (12) comporte une chambre (30) pouvant être remplie, au moins partiellement d'un agent pâteux ou visqueux et dans laquelle sont logés des moyens élastiques à action circonférentielle interposés entre lesdites masses, et du type dans lequel la première masse (12) présente, à sa périphérie externe, une empreinte pour retenir radialement les moyens élastiques (32) à action circonférentielle, caractérisé en ce que l'on dépose ledit agent de manière régulière à la périphérie externe de la première masse (12) avant fermeture de la chambre (30).

2. Procédé de fabrication selon la revendication 1, dans lequel la première masse (12) présente à sa périphérie externe une jupe (22) dotée d'au moins une empreinte (23), caractérisé en ce que l'on dépose l'agent pâteux ou visqueux dans ladite empreinte.

3. Procédé de fabrication selon la revendication 1, dans lequel la première masse (12) présente à sa périphérie externe une jupe (22) dotée d'au moins une empreinte (23) dans laquelle on monte des goulottes (82) destinées à retenir radialement les moyens élastiques à action circonférentielle (32), caractérisé en ce que l'on dépose l'agent pâteux ou visqueux dans lesdites goulottes (82).

4. Procédé de fabrication selon la revendication 1, dans lequel la première masse (12) présente à sa périphérie externe une jupe (22) dotée d'au moins une empreinte (23) dans laquelle on monte des goulottes (82) destinées à retenir radialement les moyens élastiques à action circonférentielle (32), caractérisé en ce que l'on monte les moyens élastique à action circonférentielle (32) dans lesdites goulottes (82) et en ce que l'on dépose ledit agent pâteux ou visqueux sur lesdits moyens élastiques (32).

5. Procédé de fabrication selon la revendication 1, caractérisé en ce que l'on effectue le dépôt de l'agent pâteux ou visqueux de manière régulière à l'aide d'une machine de graissage.

6. Procédé de fabrication selon la revendication 5, caractérisé en ce que la machine de graissage comporte au moins un récipient (101,102) communiquant avec une buse (108,109) destinée à déposer l'agent pâteux ou visqueux, un piston (105,106) étant monté dans ledit récipient pour évacuer ledit agent.

## Patentansprüche

1. Verfahren zur Herstellung eines Dämpfungsschwungrads, insbesondere für Kraftfahrzeuge, umfassend zwei koaxiale Massen (12, 14), von denen eine (12) für die drehfeste Verbindung mit einer treibenden Welle, etwa der Kurbelwelle eines Verbrennungsmotors bestimmt ist, während die andere (14) für die drehfeste Verbindung mit einer getriebenen Welle, etwa der Eingangswelle eines Getriebes bestimmt ist, wobei die erste Masse (12) eine Kammer (30) umfaßt, die, wenigstens teilweise, mit einem pastösen oder viskosen Mittel befüllt werden kann und in der zwischen den besagten Massen eingefügte umfangsmäßig wirksame elastische Mittel gelagert sind, und wobei die erste Masse (12) an ihrem äußeren Umfang eine Eintiefung umfaßt, um die umfangsmäßig wirksamen elastischen Mittel (32) radial zu halten, **dadurch gekennzeichnet**, daß das besagte Mittel vor dem Schließen der Kammer (30) gleichmäßig am äußeren Umfang der ersten Masse (12) aufgebracht wird.

2. Herstellungsverfahren nach Anspruch 1, wobei die erste Masse (12) an ihrem äußeren Umfang eine Einfassung (22) aufweist, die mit wenigstens einer Eintiefung (23) versehen ist, **dadurch gekennzeichnet**, daß das pastöse oder viskose Mittel in die besagte Eintiefung eingebracht wird.

3. Herstellungsverfahren nach Anspruch 1, wobei die erste Masse (12) an ihrem äußeren Umfang eine Einfassung (22) aufweist, die mit wenigstens einer Eintiefung (23) versehen ist, in die Hohlkehlen (82) eingesetzt werden, die dazu bestimmt sind, die umfangsmäßig wirksamen elastischen Mittel (32) radial zu halten, **dadurch gekennzeichnet**, daß das pastöse oder viskose Mittel in die besagten Hohlkehlen (82) eingebracht wird.

4. Herstellungsverfahren nach Anspruch 1, wobei die erste Masse (12) an ihrem äußeren Umfang eine Einfassung (22) aufweist, die mit wenigstens einer Eintiefung (23) versehen ist, in die Hohlkehlen (82) eingesetzt werden, die dazu bestimmt sind, die umfangsmäßig wirksamen elastischen Mittel (32) radial zu halten, **dadurch gekennzeichnet**, daß die umfangsmäßig wirksamen elastischen Mittel (32) in die besagten Hohlkehlen (82) eingesetzt werden und daß das besagte pastöse oder viskose Mittel auf den besagten elastischen Mitteln (32) aufgebracht wird.

5. Herstellungsverfahren nach Anspruch 1, **dadurch gekennzeichnet**, daß die Aufbringung des pastösen oder viskosen Mittels gleichmäßig mit Hilfe einer Schmiermaschine erfolgt.

6. Herstellungsverfahren nach Anspruch 5, **dadurch gekennzeichnet**, daß die Schmiermaschine wenigstens einen Behälter (101, 102) umfaßt, der mit einer Düse (108, 109) in Verbindung steht, die dazu bestimmt ist, das pastöse oder viskose Mittel aufzubringen, wobei ein Kolben (105, 106) in dem besagten Behälter gelagert ist, um das besagte Mittel auszutreiben.

## Claims

1. A method of manufacturing a damped flywheel, in particular for motor vehicles, of the type comprising two coaxial masses (12, 14), one of which (12) is adapted to be coupled in rotation to a driving shaft such as the crankshaft of an internal combustion engine, the other said coaxial mass (14) being adapted to be coupled to a driven shaft such as the input shaft of a gearbox, of the type in which the first mass (12) includes a chamber (30) which is able to be at least partially filled with a pasty or viscous agent, and in which circumferentially acting resilient means, interposed between the said masses, are lodged, and of the type in which the first mass (12) has at its outer periphery a recess for radial retention of the circumferentially acting resilient means (32), characterised in that the said agent is disposed evenly at the outer periphery of the first mass (12) before the chamber (30) is closed.

2. A manufacturing method according to Claim 1, in which the first mass (12) has at its outer periphery a skirt (22) which is formed with at least one recess (23), characterised in that the pasty or viscous agent is deposited in the said recess.

3. A manufacturing method according to Claim 1, in which the first mass (12) has at its outer periphery a skirt (22) formed with at least one seat (23), in which there are mounted spout elements (82) which are adapted for the radial retention of the circumferentially acting resilient means, characterised in that the pasty or viscous agent is deposited in the said spout elements (82) .

4. A manufacturing method according to Claim 1, in which the first mass (12) has at its outer periphery a skirt (22) formed with at least one seat (23), in which there are mounted spout elements (82) which are adapted for the radial retention of the circumferentially acting resilient means (32), characterised in that the circumferentially acting resilient means (32) are mounted in the said spout elements (82), and in that the said pasty or viscous agent is deposited on the said resilient means (32).

5. A manufacturing method according to Claim 1, characterised in that the pasty or viscous agent is deposited in a regular manner with the aid of a greasing machine.

6. A manufacturing method according to Claim 5, characterised in that the greasing machine includes at least one receiver (101, 102) which is in communication with a nozzle (108, 109) adapted to deposit the pasty or viscous agent, a piston (105, 106) being mounted in the said receiver for evacuating the said agent.
